## Europäisches Patentamt
## European Patent Office
## Office européen des brevets

(11) Veröffentlichungsnummer: **0 003 222**
**A2**

(12) **EUROPÄISCHE PATENTANMELDUNG**

(21) Anmeldenummer: 78101648.0

(22) Anmeldetag: 12.12.78

(51) Int. Cl.²: **G 01 G 3/16**
**G 01 L 1/10**

(30) Priorität: 26.01.78 CH 835/78

(43) Veröffentlichungstag der Anmeldung:
08.08.79 Patentblatt 79/16

(84) Benannte Vertragsstaaten:
BE DE FR GB IT NL SE

(71) Anmelder: WIRTH, GALLO & CO
Sonnenbergstrasse 55
CH-8032 Zürich(CH)

(72) Erfinder: Gallo, Mario, Dr.
Krönleinstrasse 1
CH-8044 Zürich(CH)

(72) Erfinder: Wirth, Johannes
Sonnenbergstrasse 55
CH-8032 Zürich(CH)

(72) Erfinder: Saner, Kaspar
Buenstrasse 58
CH-8600 Dübendorf(DE)

(54) **Massen- und Kraftmesser.**

(57) Ueber sein Mess-System gefesselter Massen- oder Kraftmesser mit einem Gestell, einem Lastträger und einer mindestens einen schwenkbar gelagerten Hebel enthaltenden Kraftübertragungskette der Last mit lastabhängigem Kraftübertragungsverhältnis, bei dem die Unlinearität des Mess-Systems und allenfalls kombiniert mit weiteren Unlinearitäten von seinen Baugruppen mit einer Kraftübertragungskette nichlinearer Kennlinie behoben werden kann, wobei diese Kraftübertragungskette kleinere Nachgiebigkeit als die bekannten Messgeräte verbunden mit grosser Anpassungsfähigkeit in Bezug auf die Parameter der zu behebenden Unlinearität und eine leichtere Justierbarkeit hinsichtlich der Streuung dieser Parameter aufweist. Der erwähnte Hebel ist mit mindestens einem der benachbarten Elemente der Kraftübertragungskette mittels eines, mindestens teilweise nicht in der Wirkungsgeraden der Kraft verlaufenden, mindestens gebietweise biegeelastischen Verbindungsteiles verbunden, der im Hebel eingespannt ist.

Fig. 1

WIRTH, GALLO & Co.  0003222  Zürich

---

Massen- und Kraftmesser

---

Die vorliegende Erfindung bezieht sich auf einen über sein Mess-System gefesselten Massen- oder Kraftmesser mit einem Gestell, einem Lastträger und einer mindestens einen schwenkbar gelagerten Hebel enthaltenden Kraftübertragungskette der Last mit lastabhängigem Kraftübertragungsverhältnis, z.B. eine Saitenwaage. Gefesselte Messer sind bekanntlich Geräte, bei welchen das Mess-System, das als Lastaufnehmer dient, nur virtuelle Bewegungen der Elemente der Kraftübertragungskette zulässt. Waagen, bei denen das Mess-System z.B. aus zwei schwingenden, von einer Referenzkraft und von einer von der Last abhängigen Kraft beaufschlagten Saiten besteht, sind typische Beispiele von gefesselten Massenmessern.

Massen- und Kraftmesser dieser Gattung sind z.B. aus den Schweizer Patenten 492 961 und 541 799 bekannt. Ihre Kraftübertragungsketten werden unlinear genannt, da die auf das Mess-System wirkende Ausgangskraft, d.h. die sog. Messkraft keine lineare Function der Eingangskraft, d.h. der zu messenden Grösse, Masse oder Kraft, ist. Diese Eigenschaft ist gewollt und dient zur Kompensation der unlinearen Kennlinie des Mess-Systems, bzw. der zwei Dynamometer aus denen das Mess-System besteht.

Die bekannten Massen- und Kraftmesser enthalten einen Hebel, bei dem sich die Länge des einen Armes unter dem Einfluss der Eingangskraft verändert. Obwohl sie mit linearer Kennlinie gebaut werden

Fall 133
Peitsche

können, bedarf dieser Art der Linearisierung eines, gemessen an der Längenveränderung des Hebelarmes, grossen Weges des Lastträgers. Die kleine Veränderung des wirksamen Hebelarmes wird durch eine grosse Bewegung in Richtung der Eingangskraft erkauft, die durchaus unerwünscht ist. Die Möglichkeit der Linearisierung von unlinearen Kennlinien von Mess-Systemen ist zudem praktisch auf die Korrektur von Fehlern dritter Ordnung beschränkt, überdies begleitet vom schlechter Justierbarkeit.

Die der Erfindung zugrunde liegende Aufgabe besteht in der Schaffung eines Massen- und Kraftmessers, bei dem die kombinierte Unlinearität des Mess-Systems und allenfalls weiterer, solche Unlinearität verursachender Baugruppen mit einer Kraftübertragungskette nichtlinearer Kennlinie behoben werden kann, wobei diese Kraftübertragungskette kleinere Nachgiebigkeit als die bekannten Messgeräte verbunden mit grosser Anpassungsfähigkeit in Bezug auf die Parameter der zu behebenden Unlinearität und eine leichtere Justierbarkeit hinsichtlich der Streuung dieser Parameter aufweisen soll.

Erfindungsgemäss wird diese Aufgabe dadurch gelöst, dass der Hebel mit mindestens einem der benachbarten Elemente der Kraftübertragungskette mittels eines, mindestens teilweise nicht in der Wirkungsgeraden der Kraft verlaufenden, mindestens gebietweise biegeelastischen Verbindungsteiles verbunden ist, der im Hebel eingespannt ist.

In der beiliegenden Zeichnung sind Ausführungsbeispiele des Erfindungsgegenstandes schematisch dargestellt.
Es zeigen:

Fig. 1    ein erstes Ausführungsbeispiel,

Fig. 2    eine schematische Darstellung der Fig. 1,

Fig. 3    eine Kraftübertragungskennlinie,

Fig. 4    ein zweites Ausführungsbeispiel,

Fig. 5    die Kraftübertragungskennlinie zu Fig. 4,

Fig. 6    ein drittes Ausführungsbeispiel, und

Fig. 7,8  je eine Ausführung des Verbindungsteiles.

0003222

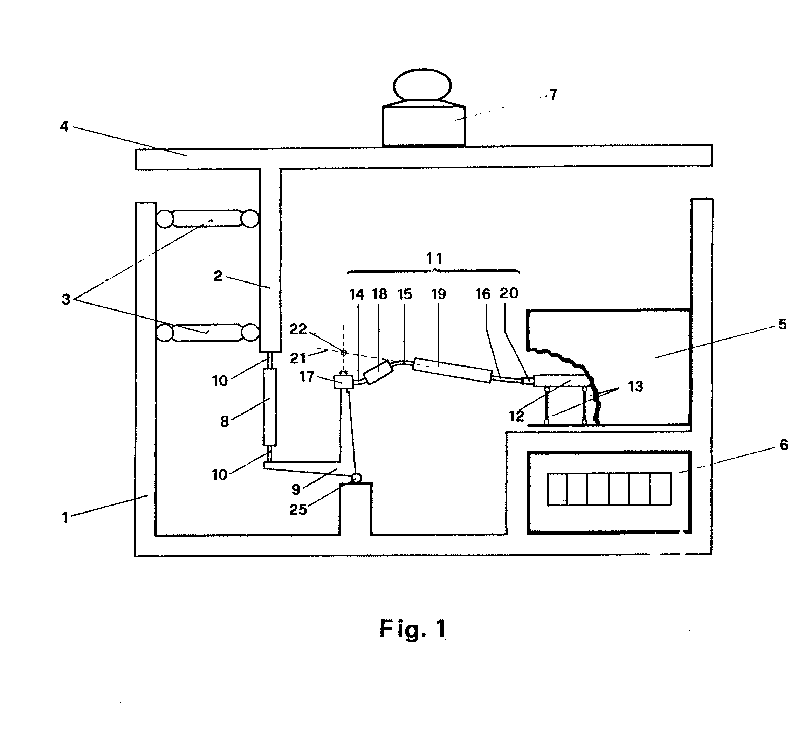

In Fig. 1 ist ein Massenmesser schematisch dargestellt. An einem Gestell 1 ist ein Lastträger 2 mittels zweier Gelenkstäbe 3 parallel und senkrecht geführt. Eine Waagplatte 4 ist mit dem Lastträger 2 fest verbunden. Der Massenmesser besteht ferner aus einem Mess-System 5 und einem Auswertungs- und Anzeigegerät 6. Das Gewicht des Wägegutes 7 wird über eine Druckstelze 8 auf den horizontalen Arm eines am Gestell 1 in einem Drehgelenk 25 schwenkbar gelagerten Winkelhebels 9 übertragen, die Druckstelze 8 ist beidseitig mit Biegegelenken 10 versehen. Der vertikale Arm des Winkelhebels 9 überträgt die auf ihn wirkende Kraft, allenfalls unter- oder übersetzt, über einen Verbindungsteil 11 an ein Eingangselement 13 des Mess-Systems 5. Das Eingangselement 12 ist an zwei Lenkern 13 parallel geführt, sodass es auf das Mess-System 5 nur Zugkräfte übertragen kann und alle Momente über das Gestell 1 ableitet.

Der Verbindungsteil 11 besteht aus einem Stab rechteckigen Querschnitts, der durch drei Verjüngungen 14, 15, 16 in vier biegesteife Abschnitte 17, 18, 19, 20 unterteilt ist. Der Abschnitt 17 ist mit einer Bohrung versehen, in die das obere Ende des vertikalen Armes des Winkelhebels 9 eingepresst ist, wodurch eine Einspannstelle entsteht, sodass sowohl Kräfte als auch Momente auf den Verbindungsteil 11 übertragen werden. Der Abschnitt 20 ist zylindrisch ausgeführt und in eine entsprechende Bohrung im Eingangselement 12 eingepresst, auch an diesem Ende können Kräfte und Momente übertragen werden, wobei letztere, wie erwähnt, über das Gestell 1 abgeleitet werden und nicht auf das Mess-System 5 übertragen werden können. Die Verjüngungen 14, 15, 16 stellen Biegelenke dar, die durch die vom Winkelhebel 9 auf den Abschnitt 17 übertragenen Kräfte und Momente beansprucht werden. Der Verbindungsteil 11 ist so geformt, dass die Verjüngungen 14, 15, 16 nicht auf einer gemeinsamen Geraden liegen. Die Verjüngungen 15, 16 sind erheblich schlanker ausgeführt als die Verjüngung 14, sodass die von ihnen ausgehenden Rückstellmomente in erster Näherung vernachlässigt werden können.

Die Wirkungsweise des Verbindungsteiles 11 ist wie folgt: Bei leerer Waagplatte 4 fällt die Wirkungsgerade 21 der auf das Eingangselement 12 wirkenden Kraft annähernd mit der Achse des Abschnittes 19 des Verbindungsteiles 11 zusammen. Sie schneidet die Verlängerung der Achse des vertikalen Armes des Winkelhebels 9 in einem Punkt 22. An diesem Punkt 22 wird das am Winkelhebel 9 wirkende Drehmoment in eine dem Abschnitt 19 auf Zug beanspruchende Kraft umgesetzt. Da bei Auflage des Wägegutes 7 auf die Waagplatte 4 der Verbindungsteil 11 aufgrund der wirkenden Kräfte und Momente zunehmend gestreckt wird, verschiebt sich der Punkt 22 nach unten. Die auf das Eingangselement 12 wirkende Kraft wächst also nicht mehr proportional zum Gewicht des Wägegutes 7, sondern wird um einer der Verkleinerung des vertikalen, wirksamen Hebelarmes entsprechenden Betrag vergrössert.

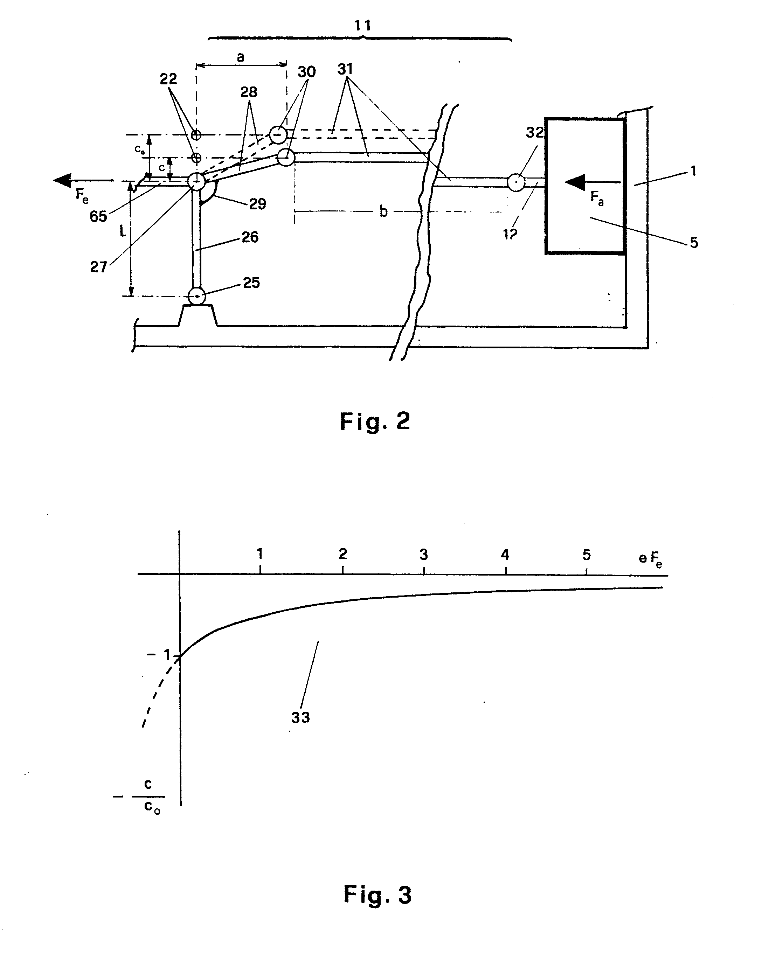

Fig. 2 ist eine schematisierte Darstellung des Winkelhebels 9, des Verbindungsteiles 11 und des Eingangselementes 12 gemäss Fig. 1, die nur zur Erläuterung der Wirkungsweise des Verbindungsteiles 11 dient. Eine im Drehgelenk 25 drehbar gelagerte Stange 26 der Länge L übernimmt die Funktion des Winkelhebels 9 von Fig. 1. An ihrem oberen Ende ist ein weiteres Drehgelenk 27 vorhanden, in dem eine Zugstange 65 momentenfrei drehbar gelagert ist, über welche auf den Verbindungsteil 11 eine Zugkraft Fe ausgeübt wird. Diese Zugkraft Fe entspricht der in Fig. 1 vom Winkelhebel 9 auf den Abschnitt 17 ausgeübten Kraft. Im Drehgelenk 27 setzt ferner eine Stange 28 an, die dem Abschnitt 18 von Fig. 1 entspricht. Die Verjüngung 14 von Fig. 1 ist durch die drehbare Stange 28 und durch eine Feder 29 ersetzt, die die Stange 28 für Fe = 0 in der gestrichelten Stellung hält. Die wirksame Länge der Stange 28 ist mit a, die Höhe eines am Ende der Stange 28 befindlichen weiteren Drehgelenkes 30 über das Drehgelenk 27 ist mit c bezeichnet. Eine Stange 31 ersetzt den Abschnitt 19 von Fig. 1. Diese Stange 31 ist momentenfrei im Drehgelenk 30 mit der Stange 28 und in einem Drehgelenk 32 mit dem Eingangselement 12 des Mess-Systems 5 verbunden, sie überträgt auf das Mess-System 5 eine Zugkraft Fa.

Die Länge b der Stange 31 ist erheblich grösser als a, sodass für eine Betrachtung in erster Näherung die Stange 31 als immer hori-

- 5 -

0003222

zontal liegend betrachtet werden darf. Damit wirkt im Drehgelenk 30 ebenfalls die Kraft Fa deren Wirkungsgerade als durch den Punkt 22 in der Verlängerung der Stange 26 verlaufend gedacht werden darf. Die Gleichung der an der Stange 26 wirkenden Drehmomente lautet:

$$Fe \cdot L = Fa (L + c) \qquad (1)$$

Unter der Voraussetzung, dass der Neigungswinkel der Stange 28 an sich klein ist und sich auch nur wenig ändert, ist die Neigungsänderung aufgrund der Einwirkung der Kraft Fe:

$$\alpha \cong \frac{c_0 - c}{a} \qquad (2)$$

Ist ferner die Drehhärte (Drehmoment/Winkel) der Feder 29 mit k gegeben, so gilt für das Drehgelenk 27:

$$k \frac{c_0 - c}{a} = Fa \cdot c \qquad (3)$$

Es sei fernner $\frac{a}{k} = e$, so folgt:

$$c = \frac{c_0}{1 + eFa} \qquad (4)$$

Aus den Gleichungen (1) und (4) folgt:

$$Fe = Fa (1 + \frac{c_0/L}{1 + eFa}) \cong Fa (1 + \frac{c_0/L}{1 + eFe}),$$

und daraus folgt:

$$\frac{Fa}{Fe} \cong 1 - \frac{c_0/L}{1 + eFe} \qquad (5)$$

Aus (4) und (5) folgt:

$$-\frac{c}{c_0} \cong \frac{-1}{1 + eFe} \cong \frac{Fa - Fe}{c_0/L \cdot Fe} \qquad (6)$$

Die relative Aenderung der Ueberhöhung des Drehgelenkes 30 ist also ein direktes Mass für den relativen Fehlbetrag der Kraft am Eingangselement 12.

In Fig. 3 ist $c/c_0$ in Funktion von eFe dargestellt. Durch geeignete Wahl der Nachgiebigkeit e des Drehgelenkes 27 kann die in Fig. 3 gezeigte Entzerrungskennlinie affin verändert und so der sich stellenden Korrektur-Aufgabe angepasst werden. Die Zuordnung von eFe zu $\frac{c}{c_0}$ wird durch den Zweig 33 einer Hyperbel dargestellt, der nur

innerhalb des IV. Quadranten verläuft. Es est ersichtlich, dass der relative Kraftschibetrag $\frac{Fa - Fe}{c_0/L.Fe}$ bei kleinen Werten von Fe am grössten ist und dann bei steigendem Fe immer mehr an Wichtigkeit verliert. Die Differenz Fe - Fa wird im Drehgelenk 25 als parallel zu Fe verlaufende Reaktionskraft aufgenommen. Der gestrichelte Teil der Kurve verläuft im III. Quadranten und stellt das Verhalten des Verbindungsteiles 11 bei negativem Fe dar, ein Betreibszustand, wie er für den in Fig. 1 dargestellten Massenmesser nicht vorgesehen ist.

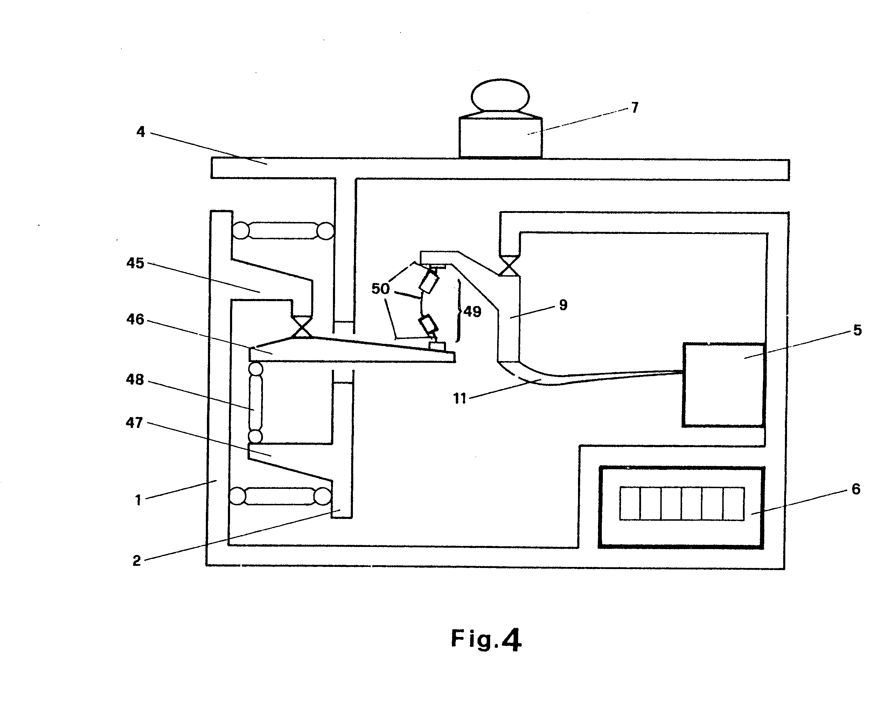

Fig. 4 zeigt ein weiteres Ausfürhungsbeispiel. Am Gestell 1 befindet sich ein Arm 45, an welchem ein Hebel 46 elastisch gelenkig gelagert ist. Der Lastträger 2 weist einen Arm 47 auf, sodass das Gewicht des Wägegutes 7 über eine Zugstange 48 am kürzeren Arm des Hebels 46 angreift. Diese Zugkraft wird über einen als Druckstelze ausgebildeten Verbindungsteil 49 untersetzt übertragen. Der Verbindungsteil 49 besteht aus einem zylindrischen Stab, der drei, beispielsweise durch Ausfräsen erzeugte Verjüngungen 50 aufweist, die als elastische Gelenke wirken. Sowohl am Hebel 46 als auch am Winkelhebel 9 ist der Verbindungsteil 49 durch Einpressungen eingespannt. Er kann daher nicht nur das untersetzte Gewicht sondern auch Momente übertragen. Der Verbindungsteil 49 ist so aus der Verbindungsgeraden der Einspannstellen ausgebogen, dass die Verjüngungen 50 nicht auf einer gemeinsamen Geraden liegen. Bei zunehmendem Gewicht knickt daher der Verbindungsteil 49 auch zunehmend nach links aus, wodurch die Wirkungsgerade der übertragenen Kraft ebenfalls nach links verlagert wird. Damit wird das Uebertragungsverhältnis des Winkelhebels 9 in Function der Last in grösserem Masse als für den Hebel 46 der einen längeren Hebelarm aufweist, verändert.

Eine besondere Ausbildung des Verbindungsteiles besteht darin, dass die Verjüngung 50, die näher zum Winkelhebel 9 liegt, dicker und damit biegesteifer ist als die zwei anderen. In diesem Falle wird auch die Richtung der Wirkungsgeraden der übertragenden Kraft verändert. Der Verbindungsteil 11 ist mittels einer Einspannung am

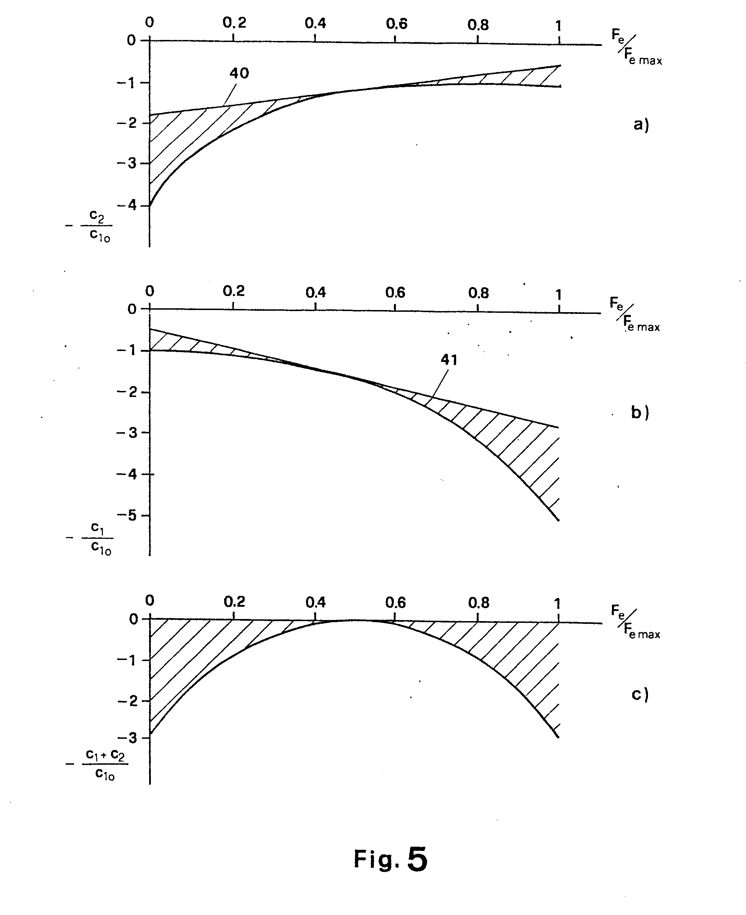

Winkelhebel 9 befestigt. Der Verbindungsteil 11 ist hier als kontinuierliches, leicht bogenförmiges Element ausgebildet, ohne die in Fig. 1 dargestellten Biegelenke. Die Korrekturfunktion des Verbindungsteiles 11 gemäss Fig. 4 entspricht im wesentlichen derjenigen gemäss Fig. 1, 2, 3 und 5a. Ihr überlagert sich diejenige des Verbindungsteiles 49, die eine Korrekturfunktion gemäss Fig. 5b ergibt, sodass sich insgesamt eine mit einem dominierenden Glied zweiter Ordnung behaftete Uebertragungskennlinie ergibt, wie sie bis auf einen konstanten Betrag in Fig. 5c dargestellt ist. Der Verbindungsteil 11 wirkt auf das Mess-System 5, das wie in Fig. 1 nur Zugkräfte aufnimmt und Momente, bzw. schräg wirkende Kraftkomponenten, an das Gestell 1 ableitet.

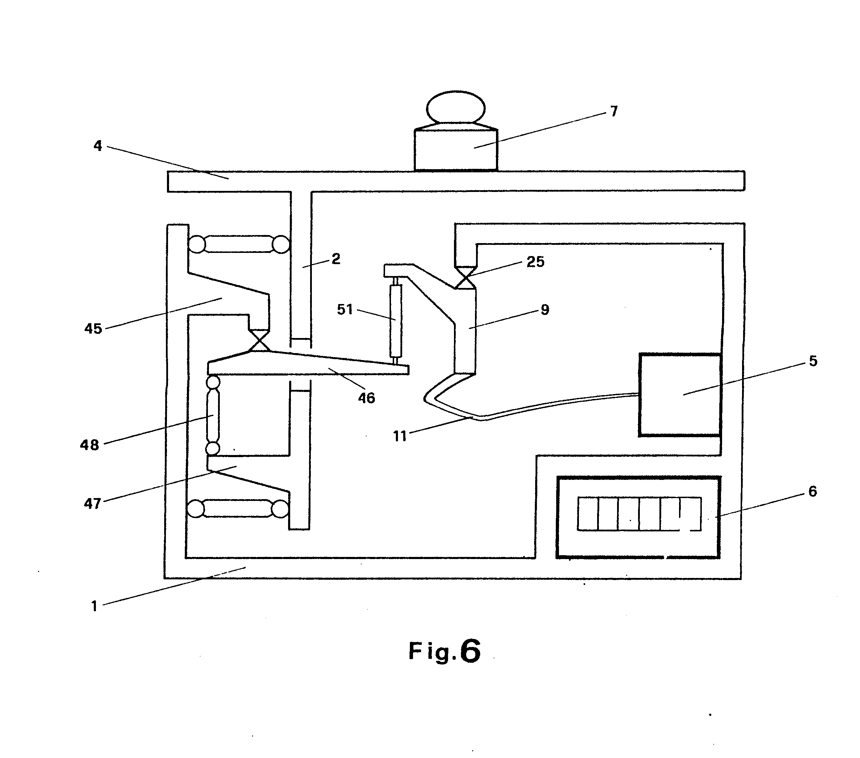

In Fig. 6 ist eine Variante zum Ausführungsbeispiel gemäss Fig. 4 dargestellt. Anstelle des Verbindungsteiles 49 ist ein beidseitig gelenkig gelagerter steifer Stab 51 eingesetzt, der das untersetzte Gewicht des Wägegutes 7 vom Hebel 46 auf den Winkelhebel 9 überträgt. Der Verbindungsteil 11 ist mittels einer Einspannung an dem Winkelhebel 9 befestigt. Bei kleinen Kräften streckt sich zunächst der nach unten ausgebogene Teil des Verbindungsteiles 11, wodurch die Wirkungsgerade der Kraft Fa, die auf das Mess-System 5 wirkt, näher an den Drehpunkt 25 des Winkelhebels 9 zu liegen kommt. Wächst das Gewicht weiter an, so beginnt sich der am Winkelhebel 9 eingespannte Teil des Verbindungsteiles 11 aufzurichten, wodurch die Wirkungsgerade wieder vom Drehpunkt wegverschoben wird.

Zu Zwecken der Darstellung wurde in allen Figuren das Mass der Ausbiegung des Verbindungsteiles 11 von der Geraden, die das Ende des vertikalen Armes des Winkelhebels 9 mit dem Eingangselement 12 verbindet, stark überhöht gezeichnet. In Wirklichkeit beträgt diese Abweichung höchstens einige Prozent der gesamten Länge des Verbindungsteiles 11. Damit ist auch die Verdrehung des Winkelhebels 9 aufgrund der Streckung des Verbindungsteiles 11 sehr klein und von der Grössenordnung der beschränkten Nachgiebigkeit des Mess-Systems 5.

- 8 -

0003222

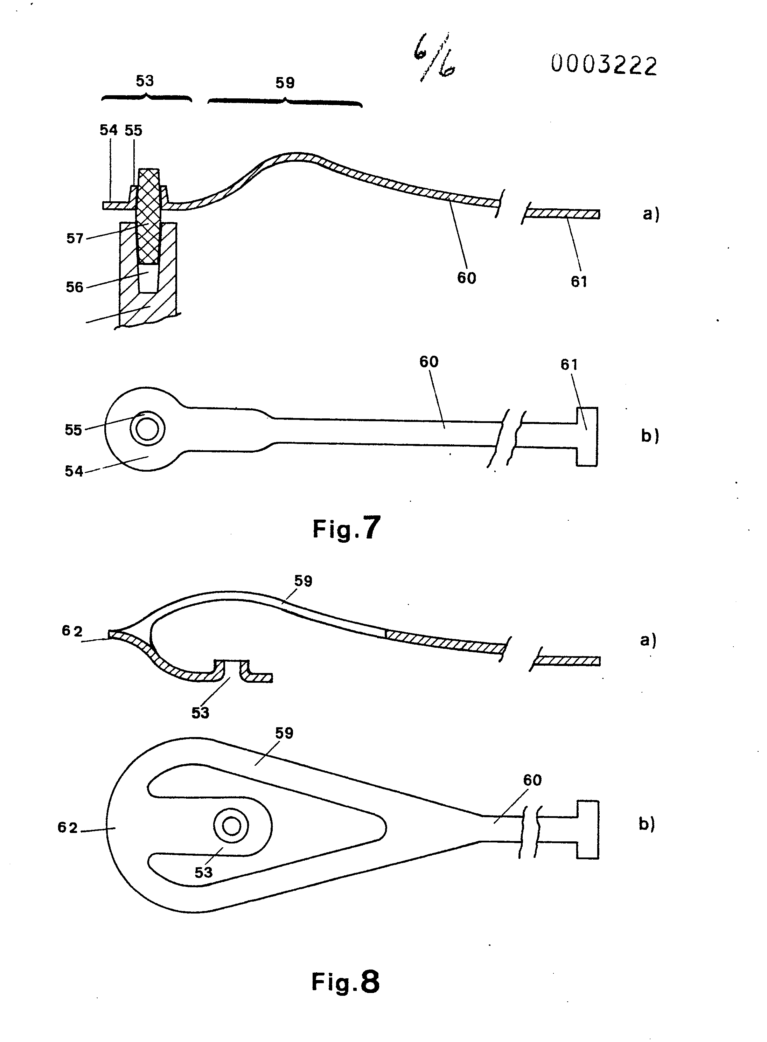

Fig. 7 stellt ein Ausführungsbeispiel eines Verbindungsteiles 11 analog zu Fig. 1 dar, Fig. 7a ist ein Längsschnitt und Fig. 7b eine Aufsicht. Der Verbindungsteil 11 gemäss Fig. 7 ist in eine Einspannstelle 53, einen aufgebogenen Mittelteil 59 und ein langes, praktisch geradliniges Band 60 unterteilt. Die Einspannstelle 53 besteht aus einem flachen Teller 54 und einem rohrförmig aufgebogenen Teil 55. In einer Bohrung am hier vertikal dargestellten Arm des Winkelhebels 9 ist ein beidseitig leicht konisch geschlif- fener Dorn 57 eingepresst, der beispielsweise aus einem Isolier- material hoher Festigkeit, wie z.B. Saphir, besteht. Der rohrförmig aufgebogene Teil 55 ist auf diesen Dorn 57 ebenfalls durch Pressen aufgesetzt. Ueber diese Verbindung - bestehend aus der Bohrung 56, dem Dorn 57 und dem rohrförmig aufgebogenen Teil 55 - können vom Winkelhebel 9 sowohl Kräfte als auch Momente auf den Verbindungsteil 11 übertragen werden. Der Mittelteil 59 ist verhältnismässig breit ausgeführt, das Band 60 ist schmaler und lang verglichen mit dem Mittelteil 59, z.B. achtmal länger. Das Endstück 61 wird im hier nicht gezeigten Eingangselement 12 des Mess- Systems 5 eingespannt. Der Mittelteil 59 könnte die gleiche Breite wie das Band 60 haben und am Uebergang vom Mittelteil 59 zum Band 60 könnte eine Verjüngung angebracht werden, die als weiches Biegegelenk wirken würde.

Fig. 8 zeigt ein Ausführungsbeispiel des Verbindungsteiles 11, wiederum als Schnitt in Fig. 8a, als Aufsicht in Fig. 8b dargestellt. Der Verbindungsteil ist als Stanzteil gefertigt, dem durch nachheriges Pressen, wie bei dem Ausführungsbeispiel nach Fig. 7 die endgültige Form erteilt wird. Die Gliederung ist dieselbe wie in Fig. 7: Einspannstelle 53 für die gleiche Art der Befestigung, Mittelteil 59 und Band 60. Der der Einspannstelle benachbarter Teil erstreckt sich somit in die der Kraftübertragung entgegengesetzte Richtung. Da der Verbindungsteil 11 um annähernd 180° gebogen ist, verläuft der anschliessende Teil 59 im wesentlichen in der Kraftübertragungsrichtung. Durch die Art der Formgebung entsteht sowohl an der Einspannstelle 53 wie auch links aussen, in der mit 62 bezeichneten Zone je ein steifes Biegegelenk. Die übrigen

0003222

Teile, besonders das Band 60, sind dagegen biegeweicher, sodass
die in Fig. 5c gezeigte Kraftübertragungskennlinie entsteht.

0003222

## PATENTANSPRUECHE

1. Ueber sein Mess-System gefesselter Massen- oder Kraftmesser mit einem Gestell, einem Lastträger, einem Mess-System und einer mindestens einen Hebel enthaltenden Kraftübertragungskette der Last mit lastabhängigem Kraftübertragungsverhältnis, dadurch gekennzeichnet, dass der Hebel (9 bzw. 46) mit mindestens einem der benachbarten Elemente der Kraftübertragungskette mittels eines mindestens teilweise nicht in der Wirkungsgeraden der Kraft verlaufenden, mindestens gebietweise biegeelastischen Verbindungsteiles (11 bzw. 49) verbunden ist, der im Hebel (9 bzw. 46) eingespannt ist.

2. Massen- und Kraftmesser nach Patentanspruch 1, dadurch gekennzeichnet, dass der Verbindungsteil (11) ein Zugband ist.

3. Massen- und Kraftmesser nach Patentanspruch 1, dadurch gekennzeichnet, dass der Verbindungsteil (49) eine Druckstelze ist.

4. Massen- und Kraftmesser nach Patentanspruch 2, dadurch gekennzeichnet, dass der als Zugband ausgebildete Verbindungsteil (11) aus einem Stab besteht, der durch drei Verjüngungen (14, 15, 16) in vier biegesteife und drei biegeelastische Abschnitte gegliedert ist, wobei die Steifigkeit der in Richtung der Lastkraft ersten Verjüngung (14) grösser ist, als die der folgenden Verjüngungen (15, 16).

5. Massen- und Kraftmesser nach Patentanspruch 2, dadurch gekennzeichnet, dass der als Zugband ausgebildete Verbindungsteil (11) aus einem flachen Band besteht, das an der Einspannstelle (53) tellerförmig erweitert ist, anschliessend einen Mittelteil (59) ausweist, der in ein langgestrecktes Band (60) übergeht.

6. Massen- und Kraftmesser nach Patentanspruch 5, dadurch gekennzeichnet, dass das Zugband zwischen Mittelteil (59) und dem Band (60) eine Verjüngung kleinerer Breite aufweist.

7. Massen- und Kraftmesser nach Patentanspruch 3, dadurch gekennzeichnet, dass der als Druckstelze ausgebildete Verbindungsteil (49) aus zwei biegesteifen Stäben gebildet ist, die sowohl untereinander als auch mit den Einspannstellen durch ein weichelastisches Band befestigt sind.

8. Massen- und Kraftmesser nach Patentanspruch 3, dadurch gekennzeichnet, dass der als Druckstelze ausgebildete Verbindungsteil (49) aus zwei biegesteifen Stäben gebildet ist, die sowohl untereinander als auch mit den Einspannstellen durch hartelastische Bänder verbunden sind.

9. Massen- und Kraftmesser nach Patentanspruch 3, dadurch gekennzeichnet, dass der als Druckstelze ausgebildete Verbindungsteil (49) aus zwei biegesteifen Stäben gebildet ist, die untereinander und mit der einen Einspannstelle durch ein weichelastisches, mit der anderen Einspannstelle durch ein hartelastisches Band verbunden sind.

10. Massen- und Kraftmesser nach Patentanspruch 2, dadurch gekennzeichnet, dass der der Einspannstelle (53) am Hebel (9) benachbarte Teil des Verbindungsteiles (11) sich im wesentlichen in die der Kraftübertragungsrichtung entgegengesetzte Richtung erstreckt und dass die anschliessenden Teile im wesentlichen in der Kraftübertragungsrichtung verlaufen.

11. Massen- und Kraftmesser nach Patentanspruch 10, dadurch gekennzeichnet, dass das Band an einem Ende um annähernd 180° gebogen ist.

12. Massen- und Kraftmesser nach Patentanspruch 2, dadurch gekennzeichnet, dass der als Zugband ausgebildete Verbindungsteil (11) aus einem Band konstanter Dicke besteht.

**Fig. 1**

**Fig. 2**

**Fig. 3**

Fig.4

Fig. 5

Fig.6

0003222

**Fig.7**

**Fig.8**